# EUROPEAN PATENT SPECIFICATION

(11) **EP 3 930 423 B1**
(45) Date of publication and mention of the grant of the patent: **11.10.2023**
(21) Application number: 20181307.8
(22) Date of filing: 22.06.2020
(51) Int. Cl.: H05B 3/24, F24H 9/18

(54) **HEATING MODULE FOR A HEATING DEVICE**
HEIZMODUL FÜR EINE HEIZVORRICHTUNG
MODULE DE CHAUFFAGE POUR UN DISPOSITIF DE CHAUFFAGE

(43) Date of publication of application: 29.12.2021
(73) Proprietor: Mahle International GmbH, 70376 Stuttgart (DE)
(72) Inventor: DAUDON, Guillaume, 88470 La Bourgonce (FR); EDEL, Nicolas, 68360 Soultz (FR); MAGNIER, Gilles, 90110 Rougemont-le-Chateau (FR)
(74) Representative: BRP Renaud & Partner mbB Rechtsanwälte Patentanwälte Steuerberater

(56) References cited:
- EP-A1- 3 647 676
- CN-U- 207 678 018
- DE-A1-102004 055 523
- DE-A1-102010 037 132
- US-A- 3 397 302
- US-A1- 2019 084 374

## Description

The present invention relates to a heating module for a heating device, which has at least one electric heating element and a contact sheet for the electric supply of the heating element. The invention further relates to a heating device with at least one such heating module.

The transfer of heat to a body or a liquid is an important task in a number of appliances such as in Heating Ventilation and Air Conditioning appliances, also called HVAC, in vehicles and the like. It is common to provide a heating device for the generation and transfer of heat. A controlled generation and transfer of heat are usually achieved by the use of an electric heating element, which generates heat when it is supplied with electric power. The supply of electric power requires an electric contact of the heating element. For this purpose, conductive contact sheets are generally used. The contact sheets contact a corresponding outer face of the heating element in order to allow a current through the heating element.

In order to prevent electric interaction of the heating element and the contact sheet with the surrounding, an electric insulation is necessary. For this purpose, an electric insulating layer is arranged on the side of the contact sheet averted from the heating element. In addition it is beneficial to provide for an advanced heat transfer from the heating element to the body or liquid to be heated. It is known to provide a ceramic plate as an insulating element. It is also known to provide a thermal interface to enhance the heat transfer. The result is a structure, in which the contact sheet is arranged on one face of the corresponding heating element. In the structure for each contact sheet, there is a corresponding thermal interface and/or ceramic plate arranged on the side of the contact sheet averted from the corresponding face of the heating element. The ceramic plate, usually also the thermal interface, are rigid parts. This leads to a reduced mechanical flexibility of the structure during temperature changes. Thus, during operation of the heating element cracks can occur. Also, gaps between the contact sheet and the corresponding face of the heating element and/or gaps between the contact sheet and the thermal interface and/or the ceramic plate can occur. These occurrences lead to a reduced electric supply of the heating element and/or a reduced heat transfer from the heating element and thus to a reduced efficiency. In addition damages and failures can occur.

US 3,397,302 A discloses an electric heater. The heater has a sandwich-like structure of layers. An intermediate layer comprises an electrical resistance element and is energized by wires. On each side of the intermediate layer a metallic layer is arranged and turned to enclose and contact a corresponding wire.

EP 3 647 676 A1 discloses a heat exchanger. The heat exchanger has a PTC heater with a tubular body. The PTC heater comprises a heating ceramic. On the upper and lower side of the heating ceramic contact plates are arranged and on each contact plate an insulation layer is arranged.

To simplify production of heating devices, the heating device usually comprises at least one heating module. Each heating module comprises several electric heating elements and the corresponding contact sheets. The heating module also comprises the corresponding thermal interfaces and/or ceramic plates. Within the heating modules, the rigidity of said components leads to an enhancement of the above mention effects and disadvantages.

The problem addressed by the present invention is therefore the disclosure of improved, or at least alternative, forms of embodiment of a heating module for a heating device and of a heating device of the above-mentioned type, which are in particular characterized by an improved efficiency and/or an improved durability.

According to the invention, this problem is solved by the subject matters of the independent claims. Advantageous forms of embodiment are the subject matter of the dependent claims.

The present invention is based on the general idea whereby, in a heating module comprising at least one electric heating element, a contact sheet for the electric supply of the heating element is laminated on a corresponding thermal interface to form a single component, wherein the thermal interface is insulating and soft. The result is an enhanced flexibility of the component. Thus, mechanical loads caused by temperature differences can be balanced be the component. This leads to a prevention or at least reduction of gaps between the contact sheet and the heating element as well as between the contact sheet and the thermal interface and thus within the component. Moreover, cracks in the component are prevented or at least reduced. Thus the electric supply of the heating element and the heat transfer from the heating element are improved. This leads to an improved efficiency of the heating module and the corresponding heating device. Moreover, the durability of the heating module is enhanced. The component comprises the contact sheet and the thermal interface further allows a simplified assembly of the heating module.

In accordance with the general idea of the invention, the heating module comprises at least one electric heating element. Each of the at least one electric heating elements has an upper face and a lower face averted from the upper face and distanced from the upper face in a distance direction. The module, for at least one of the faces, comprises a corresponding conductive contact sheet for the electric supply of the heating element. Each contact sheet is arranged on the corresponding face and in electric contact with the face. The module further comprises, for each contact sheet, a corresponding thermal interface. The thermal interface transfers heat and improves the transfer of heat generated in the heating element towards a heating area distanced to the contact sheet and arranged on the side of the thermal interface averted from the contact sheet. In the heating area, in a corresponding heating device, a fluid can flow and/or or a body can be arranged and thus be heated during operation. According to the invention, at least one of the at least one thermal interfaces is insulating and soft and the corresponding contact sheet is laminated on the thermal interface to form said single component.

A thermal interface in the sense of the present invention is a body, which has enhanced thermal conductivity properties. The thermal interface is therefore a thermal interface body.

Each electric heating element can be of an arbitrary kind, provided that it generates heat, when it is electrically supplied.

At least one of the at least one heating elements is preferably a PTC-element, wherein PTC stand for positive temperature coefficient. At least one of the PTC-elements is advantageously a PTC-Stone. These heating elements have beneficial self-regulating properties and are thus easy to imply.

In advantageous embodiments, at least one of the heating elements has a cuboid-like shape, wherein the upper face and the lower face are each flat. This leads to an improved and simplified contact of the contact sheet to the corresponding face and thus to improved electric supply and heat transfer. The result is an improved efficiency and durability. In addition, the assembly of the module is simplified.

It is preferred, if the upper face and the lower face of at least one of the heating elements are those faces of the heating element with a bigger area compared to other faces of the heating element. That is, the electric supply and the heat transfer occur through the big faces of the heating element and are thus enhanced.

Each of the at least one contact sheets of the component can be of any kind, provided it is shaped as a sheet and electrically conductive.

It is preferred, if at least one of the contact sheets is a metal or an alloy sheet, preferably made of a copper alloy or aluminium. That is at least one of the contact sheets is a copper alloy sheet or an aluminium sheet.

Each of the at least one thermal interfaces of the component can be of any kind, provided it is soft and electrically insulating.

At least one of the at least one thermal interfaces preferably comprises a soft polymer. In particular, at least one of the at least one thermal interfaces can be made of a soft polymer.

As an alternative or in addition, at least one of the at least one thermal interfaces can comprise an ion gel. In particular, the thermal interface can comprise a soft polymer and ion gel integrated in the polymer, wherein the polymer is a matrix.

Advantageously, a thickness of the thermal interface, that is the dimension of the thermal interface running in distance direction, also referred to as interface thickness in the following, is bigger than a thickness of the corresponding contact sheet, also referred to as sheet thickness in the following. This leads to an enhanced flexibility and improved handling of the component. Beneficial flexibilities and handling of the component result, if the interface thickness is at least double the sheet thickness.

In preferred embodiments, the module comprises an upper contact sheet which contacts at least one of the at least one upper faces. The module further comprises an upper thermal interface, wherein the at least one upper contact sheet is laminated on the upper thermal interface. That is, the module comprises an upper component.

It is preferred if the module comprises a lower contact sheet, which contacts at least one of the at least one lower faces. The module further comprises a lower thermal interface, wherein the at least one lower contact sheet is laminated on the lower thermal interface. That is, the module comprises a lower component.

The module conveniently comprises at least two heating modules. At least two of the at least two heating elements are advantageously the same part, that is comprise the same design.

It is preferred if, for at least two of the upper faces and/or two of the lower faces, the module comprises a common thermal interface. That is, at least two of the upper faces have a common corresponding upper thermal interface and/or at least two of the lower faces have a common corresponding lower thermal interface. It is further preferred if the module, for at least two of the upper faces and/or at least two of the lower faces, comprises a common corresponding contact sheet, which is laminated on the corresponding thermal interface. That is, at least two of the upper faces have a common corresponding upper contact sheet laminated on the corresponding common upper thermal interface and/or at least two of the lower faces have a common corresponding lower contact sheet laminated on the corresponding common lower thermal interface. In other words, the module has, for at least two neighbouring heating elements, a common upper component and/or a common lower component. Preferably the module comprises an upper component for all upper faces and a lower component for all lower face. This results in a simplified manufacture and assembly of the module and at the same time enhanced efficiency and durability.

It is particularly preferred if the module, for at least one of the at least one common contact sheets, comprises a corresponding busbar at an end of the common sheet, wherein the busbar serves the electric connection of the common sheet to an electric power supply. In particular, the busbar is part of the corresponding component and thus integrated in the component. The busbar conveniently laterally projects the corresponding thermal interface. This leads to an improved simplification of the assembly of the module and the corresponding heating device.

At least one of the at least one busbars is preferably the corresponding common sheet and vice versa. That is, the common sheet is constructed as a busbar.

According to preferred embodiments, the busbar is designed in a flexible manner and is thus flexible. This allows a simplified connection of the busbar to a corresponding power supply. Moreover, the component has an all-over improved flexibility, which leads to an improved efficiency and durability of the module.

The flexibility of the busbar is preferably achieved by a reduced thickness of the busbar, also referred to as busbar thickness in the following. The busbar thickness is in particular less than 0,2 mm, preferably less than 0,1 mm.

Forms of embodiment are advantageous, in which at least one of the at least one common sheets, for each corresponding face, comprises a corresponding section, also referred to as contact section in the following. That is, the common sheet comprises at least two successive and distanced contact sections, wherein between successive contact sections, the common sheet comprises sections connecting the contact section, also referred to as connection section in the following. That is, the common sheet is continuous, wherein the contact sections and connection sections are arranged alternately. In the common sheet, the connection sections have an area, which is smaller than an area of the contact sections.

According to the invention, at least one of the at least one thermal interfaces comprises a recess, in which the corresponding contact sheet is laminated. The recess is thus open in distance direction. This leads to a defined and accurate design of the component and a simplified manufacture of the component and thus the module. Moreover, the arrangement of the sheet in the recess leads to a prevention or at least reduction of gaps between the contact sheet and the thermal interface. This results in an improved heat transfer. At the same time, gaps between the contact sheet and the at least one corresponding face are prevented or at least reduced, leading to an improve power supply and heat transfer. Thus, the efficiency and durability of the module are improved.

It is preferred if the recess is delimited by at least one, preferably by two, collars transverse to the distance direction. The at least one collar is advantageously in contact with the at least one corresponding face. This leads to a direct heat transfer from the heating element to the thermal interface. Thus the efficiency of the module is improved.

It is understood that a heating device with at least one such heating module also belongs to the scope of this invention.

The heating device preferably comprises, for each of the lower faces and upper faces, a corresponding heating area. The contact sheet and the thermal interface and thus the component, in operation, transfer heat from the corresponding face to the corresponding heating area.

It is possible to arrange a heat transferring and insulating plate, for instance a ceramic plate, between at least one of the components and the corresponding heating area.

Preferably, there is no such plate between the component and the corresponding heating area and thus between the thermal interface and the corresponding heating area. That is, the heating module, preferably the heating device, is free of such plates.

The heating module and the heating device can be used in arbitrary appliances.

The heating module and the heating device can in particular be used in a Heating Ventilation and Air Conditioning appliance, also called HVAC. The HVAC, in particular the heating module and/or the heating device, can be used in a motor vehicle.

It is in particular possible to use the heating module in a supplemental heater. That is, the heating device can be a supplemental heater, in particular in a HVAC.

Further important characteristics and advantages of the invention proceed from the sub-claims, the drawings and the associated description of the figures, with reference to the drawings.

It is understood that the above-mentioned characteristics, and those to be described hereinafter, are not only applicable in the respective combination indicated, but also in other combinations, or in isolation, without departing from the scope of the present invention.

Preferred exemplary embodiments of the invention are represented in the drawings and described in greater detail in the following description, wherein identical reference numbers identify identical, similar or functionally equivalent components.

In the figures, schematically in each case:
- Fig. 1: shows a side view of a heating device with a heating module,
- Fig. 2: shows a sectional view of the heating device,
- Fig. 3: shows a plan view of a component of the heating module,
- Fig. 4: shows a sectional view of the component as indicated with A-A in Figure 3,
- Fig. 5: shows the view of Figure 2 in another exemplary embodiment.

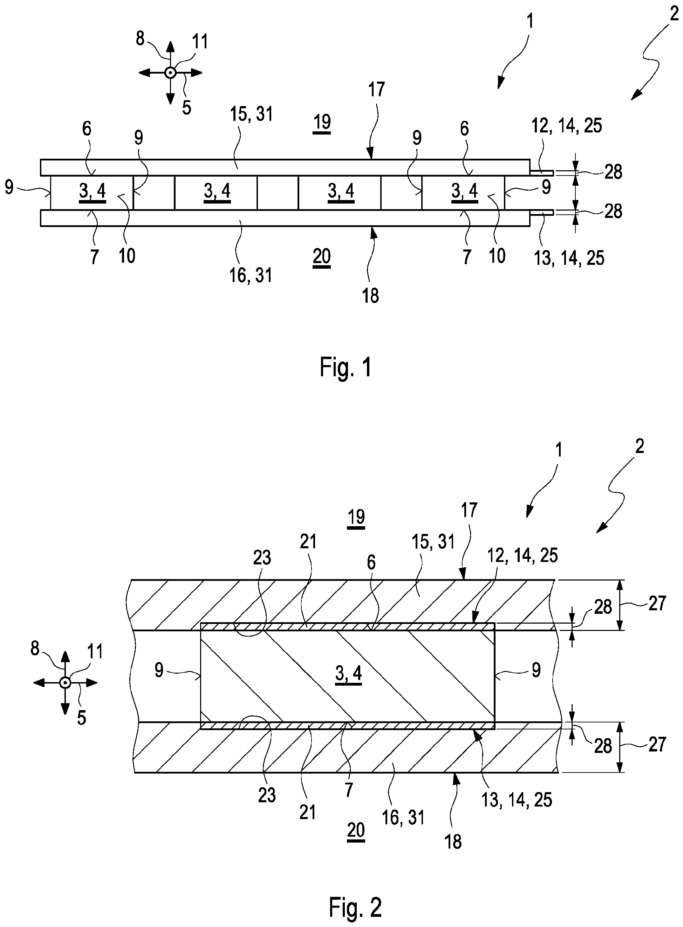

A heating module 1, as it is exemplary shown in Figures 1 to 5, is generally part of a heating device 2, as it is exemplary shown in Figures 1, 2 and 5. The heating module 1 comprises at least one electric heating element 3, which, when electrically supplied and thus in operation, generates heat. In the exemplary embodiments shown, the heating module 1, by way of example, comprises eight heating elements 3, wherein four of the heating elements 3 are shown in Figure 1.The heating elements 3 have the same design. The heating elements 3 are each preferably a PTC-element 4, wherein PTC stand for positive temperature coefficient. The heating elements 3 are arranged distanced to another in a longitudinal direction 5, in the exemplary embodiments shown. Each of the heating elements 3 has a cuboid-like shape with an upper face 6 and a lower face 7, which are averted from another and distanced in a direction 8, which is also referred to as distance direction 8 in the following. In the exemplary embodiments shown, the distance direction 8 runs transverse with respect to the longitudinal direction 5. The upper face 6 and the lower face 7 are the faces 6, 7 of each heating element 3 with the biggest area. That is, each heating element 3 has two faces 9 distanced and averted from another in longitudinal direction 5, which will also be referred to as longitudinal faces 9 in the following. Each heating element 3 further has two faces 10 distanced and averted from another in a direction 11 transverse to the longitudinal direction 5 and transverse to the distance direction 8, wherein these faces 10 will also be referred to as transversal faces 10 and the direction 11 will also be referred to as transverse direction 11 in the following. The lower face 6 and the upper face 7 of each heating element 3 are bigger and thus have a bigger area than its longitudinal faces 9 and transversal faces 10.

As in particular visible in Figures 2 to 5, the heating module 1, for at least one of the upper faces 6 and lower faces 7 of each heating element 3, comprises a corresponding electrically conductive contact sheet 12, 13, which is for instance made of aluminium or a copper alloy. In the exemplary embodiments shown, the heating module 1, for the upper faces 6 of all heating elements 3, comprises an upper contact sheet 12, which is thus a common contact sheet 14 of the upper faces 6. In addition, in exemplary embodiments shown, the heating module 1, for the lower faces 7 of all heating elements 3, comprises a lower contact sheet 13, which is thus a common contact sheet 14 of the lower faces 7. The contact sheets 12, 13 serve the electric supply of the heating elements 3 via the corresponding faces 6, 7 and are thus arranged on the corresponding upper faces 6 or lower faces 7 respectively. The heating module 1, for each contact sheet 12, 13, comprises a corresponding thermal interface 15, 16. In the exemplary embodiments shown, the heating module 1 hence comprises an upper thermal interface 15 corresponding to the upper contact sheet 12 and a lower thermal interface 16 corresponding to the lower contact sheet 13. That is, the upper thermal interface 15 is a common thermal interface 31 of the upper faces 6 and the lower thermal interface 16 is a common thermal interface 31 of the lower faces 7. Each thermal interface 15, 16 is arranged on the side of the corresponding contact sheet 12, 13 averted from the corresponding upper faces 6 or lower faces 7 respectively. The heating device 2 comprises at least one heating area 19, 20, in which a body not shown can be arranged and/or through which a fluid can flow and be heated during operation. At least one of the at least one heating areas 19, 20 is arranged on the side of a corresponding thermal interface 15, 16 averted from the corresponding contact sheet 12, 13 and thus face 6, 7. In the exemplary embodiments shown, the heating device 2, for each of the thermal interfaces 15, 16, comprises a corresponding heating area 19, 20. That is, the heating device 2 comprises an upper heating area 19 arranged on the side of the upper thermal interface 15 averted from the upper contact sheet 12. In addition, the heating device 2 comprises a lower heating area 20 arranged on the side of the lower thermal interface 16 averted from the lower contact sheet 13.

At least one of the contact sheets 12, 13 is laminated on the corresponding thermal interface 15, 16 to form a single component 17, 18. In the exemplary embodiments shown, each of the contact sheets 12, 13 is laminated on the corresponding thermal interface 15, 16. That is, the upper sheet 12 and the upper thermal interface 15 form a single upper component 17 and the lower sheet 13 and the lower thermal interface 16 form a single lower component 18. Each thermal interface 15, 16 is electrically insulating and soft. Each thermal interface 15, 16 can for example be made of or comprise a soft and insulating polymer. This leads to a flexible property of each component 17, 18. Thus gaps within each component 17, 18 and between each contact sheet 12, 13 and the corresponding faces 6, 7 are prevented and at least reduced. This leads to an improved electric supply of the heating elements 3 and an improved heat transfer from each face 6, 7 to the corresponding heating area 19, 20. Hence, the heating module 1 and the heating device 2 comprise an improved efficiency. In addition, damages and/or cracks of the heating elements 3, the contact sheets 12, 13 and the thermal interfaces 15, 16 are prevented or at least reduced. Hence, the durability of heating module 1 and the heating device 2 is improved.

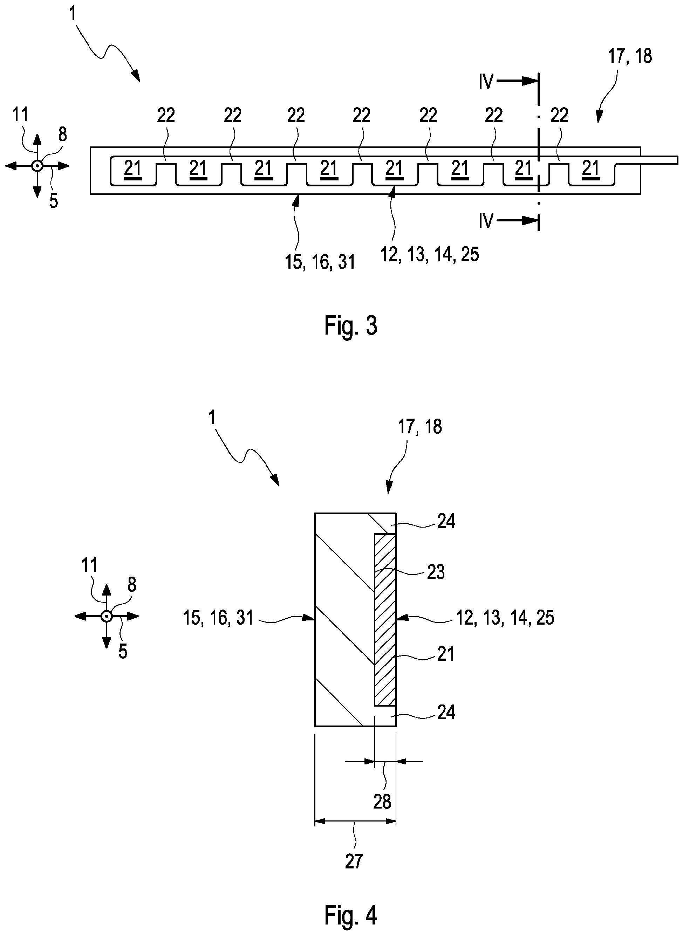

Figure 3 shows a plan view of such a component 19, 20 on the side facing the heating elements 3. As shown in Figure 3, in the exemplary embodiments shown, each of the contact sheets 12, 13, for each of the corresponding faces 6, 7 comprises a corresponding section 21, which covers the corresponding face 6, 7, wherein these sections 21 are also referred to as contact sections 21 in the following. That is, the upper contact sheet 12, for each of the upper faces 6, comprises a corresponding contact section 21. Moreover, the lower contact sheet 13, for each of the lower faces 7, comprises a corresponding contact section 21. Each contact sheet 12, 13 further, between successive contact sections 21, comprises sections 22 connecting the contact sections 21, wherein these sections 22 are also referred to as connection sections 22 in the following. As can further be seen in Figure 3, each contact section 21 is bigger and thus has a bigger area than each connection section 22.

Figure 4 shows a sectional view through such a component 17, 18 as indicated by the plane A-A in Figure 3. In the exemplary embodiments shown and as in particular shown in Figure 4, each thermal interface 15, 16 comprises a recess 23 for the corresponding contact sheet 12, 13, which in open in distance direction 8. Each recess 23 has a shape and size corresponding to the corresponding contact sheet 12, 13, so as to receive the contact sheet 12, 13. Each recess 23, in the transverse direction 11, is arranged essentially in the centre of the corresponding thermal interface 15, 16. That is, in transverse direction 11, collars 24 of the thermal interface 15, 16 delimiting the recess 23 (see Figure 4), contact the corresponding upper face 6 or lower face 7 respectively.

As in particular shown in Figure 1 and Figure 3, in the exemplary embodiments shown, each of the components 17, 18 comprises a busbar 25 for the electric connection of the corresponding contact sheet 12, 13 to a power supply of the heating device 2 not shown. Each busbar 25 laterally projects the corresponding thermal interface 15, 16. In the exemplary embodiments shown, each busbar 25 is the corresponding contact sheet 12, 13 and vice versa. That is, each of the contact sheets 12, 13 of the exemplary embodiments shown is a busbar 25 and projects the corresponding thermal interface 15, 16. In the exemplary embodiments shown, each busbar 25 projects the corresponding thermal interface 15, 16 in longitudinal direction 9, as shown in Figures 1 and 3, wherein in Figure 3 the projection of the busbar 25 is simply indicated. Each busbar 25 and thus each contact sheet 12, 13 is designed in a flexible manner. This leads to an all-over flexibility of the component 17, 18. The flexible design of each busbar 25 is achieved by a thickness 28 of the busbar 25 and thus of the contact sheet 12, 13, also referred to as sheet thickness 28, running in distance direction 8 being less than 0,2 mm, in particular less than 0,1 mm, that is less than 100 µm.

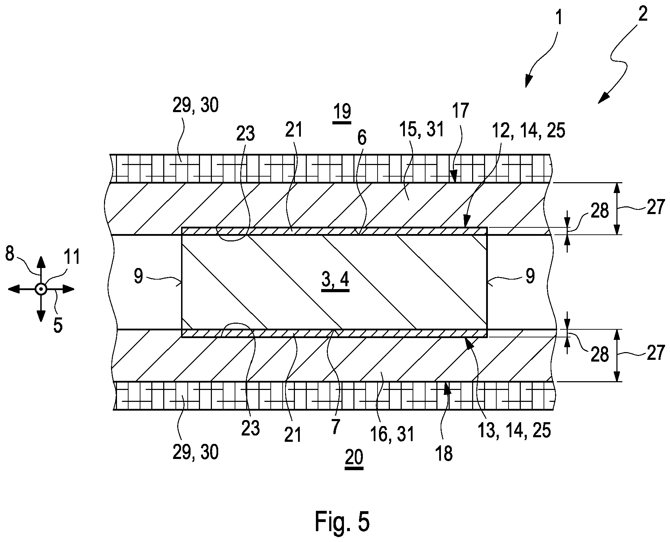

As in particular can further be seen in Figures 2 and 5, a thickness 27 of each thermal interface 15, 16, also referred to as interface thickness 27 in the following, running in distance direction 8 is bigger than a thickness 28 of the corresponding contact sheet 12, 13, also referred to as sheet thickness 28 in the following, running in distance direction 8. The interface thickness 27 is in particular at least double the sheet thickness 28.

The upper component 17 and the lower component 18, with the possible exception of the busbar 25, preferably have the same design. The design of the busbars 25 might vary in order to identify each busbar 25 for a corresponding electric connection to the power supply.

In the exemplary embodiment shown in Figure 2, the thermal interface 15, 16 of each component 17, 18 delimits the corresponding heating area 19, 20. In the exemplary embodiments shown in Figure 5, an electrically insulating plate 29, in particular ceramic plate 30, is arranged between each thermal interface 15, 16 and the corresponding heating area 19, 20. That is, the heating device of Figure 2 is free of such plates 30.

## Claims

1. Heating module (1) for a heating device (2),
- with at least one electric heating element (3), which has an upper face (6) and a lower face (7) averted from the upper face (6) and distanced from the upper face (6) in a distance direction (8),
- wherein, for at least one of the faces (6, 7), the module (1) comprises a corresponding conductive contact sheet (12, 13) for the electric supply of the heating element (3), which is arranged on the corresponding face (6, 7),
- wherein, for each contact sheet (12, 13), the module comprises a thermal interface (15, 16) for transferring heat generated in the heating element (3) towards a heating area (19, 20) distanced to the contact sheet (12, 13) and arranged on the side of the thermal interface (15, 16) averted from the contact sheet (12, 13),
- wherein at least one of the thermal interfaces (15, 16) is insulating and soft and the corresponding contact sheet (12, 13) is laminated on the thermal interface (15, 16),
**characterized in that**,
at least one of the at least one thermal interfaces (15, 16) comprises a recess (23) open in distance direction (8), in which the corresponding contact sheet (12, 13) is laminated..

2. Heating module according to claim 1,
**characterized in that**,
at least one of the at least one thermal interfaces (15, 16) is an upper thermal interface (15), at least one of the at least one contact sheets (12, 13) is an upper contact sheet (12) which contacts at least one of the at least one upper faces (6) and is laminated on the upper thermal interface (15).

3. Heating module according to claim 1 or 2,
**characterized in that**
at least one of the at least one thermal interfaces (15, 16) is a lower thermal interface (16), at least one of the at least one contact sheets (12, 13) is a lower contact sheet (13) which contacts at least one of the at least one lower faces (7) and is laminated on the lower thermal interface (16).

4. Heating module according to any of claims 1 to 3,
**characterized in that**
- the module (1) comprises at least two heating elements (3),
- the module (1), for at least two of the upper faces (6) and/or at least two of the lower faces (7), comprises a common thermal interface (31),
- the module (1), for at least two of the upper faces (6) or lower faces (7), comprises a common contact sheet (14), which is laminated on the corresponding thermal interface (15, 16).

5. Heating module according to claim 4,
**characterized in that**
at least one of the at least one common sheets (14), for the electric connection to a power supply, is constructed as a busbar (25) and projects the corresponding thermal interface (15, 16).

6. Heating module according to claim 5,
**characterized in that**
the busbar (25) comprises a thickness (28) of less than 0,2 mm, in particular of less than 0,1 mm, running in distance direction (8).

7. Heating module according to any of claims 4 to 6,
**characterized in that**
- the common sheet (14), for each corresponding face (6, 7), comprises a corresponding contact section (21),
- the common sheet (14), between successive contact sections (21), comprises a connection section (22),
- the connection sections (22) have an area, which is smaller than an area of the contact sections (21).

8. Heating module according to any of claims 1 to 7,
**characterized in that**
the recess (23), transverse to the distance direction (8), is delimited by two collars (24) of the thermal interface (15, 16), which collars (24) contact the corresponding face (6, 7) of the at least one corresponding heating element (3).

9. Heating module according to any of claims 1 to 8,
**characterized in that**
at least one of the at least one contact sheets (12, 13) is made of a copper alloy or aluminium.

10. Heating module according to any of claims 1 to 9,
**characterized in that**
at least one of the at least one thermal interfaces (15, 16) comprises an insulating and soft polymer.

11. Heating module according to claim 10,
**characterized in that**
at least one of the at least one thermal interfaces (15, 16) comprises ion gel.

12. Heating module according to any of claims 1 to 11,
**characterized in that**
- each thermal interface (15, 16) comprises an interface thickness (27) running in distance direction (8).
- each contact sheet (12, 13) comprises a sheet thickness (28) running in distance direction (8),
- the interface thickness (27) of at least one of the at least one thermal interfaces (15, 16) is at least double the sheet thickness (28) of the corresponding contact sheet (12, 13).

13. Heating device (2) with at least one heating module (1) according to any of the claims 1 to 12 and with at least one heating area (19, 20), which is arranged on the side of a corresponding of the at least one thermal interfaces (15, 16) averted from the corresponding face (6, 7).

## Patentansprüche

1. Heizmodul (1) für eine Heizvorrichtung (2),
- mit mindestens einem elektrischen Heizelement (3), das eine Oberseite (6) und eine von der Oberseite (6) abgewandte und von der Oberseite (6) in einer Abstandsrichtung (8) beabstandete Unterseite (7) aufweist,
- wobei das Modul (1) für mindestens eine der Seiten (6, 7) ein zugehöriges leitendes Kontaktblech (12, 13) für die elektrische Versorgung des Heizelements (3) umfasst, das auf der zugehörigen Seite (6, 7) angeordnet ist,
- wobei das Modul für jedes Kontaktblech (12, 13) eine thermische Schnittstelle (15, 16) zum Übertragen von in dem Heizelement (3) erzeugter Wärme zu einem Heizbereich (19, 20) umfasst, der von dem Kontaktblech (12, 13) beabstandet und auf der dem Kontaktblech (12, 13) abgewandten Seite der thermischen Schnittstelle (15, 16) angeordnet ist,
- wobei mindestens eine der thermischen Schnittstellen (15, 16) isolierend und weich ist und das zugehörige Kontaktblech (12, 13) auf die thermische Schnittstelle (15, 16) laminiert ist,
**dadurch gekennzeichnet, dass**
mindestens eine der mindestens einen thermischen Schnittstellen (15, 16) eine in Abstandsrichtung (8) offene Aussparung (23) umfasst, in die das zugehörige Kontaktblech (12, 13) laminiert ist.

2. Heizmodul nach Anspruch 1,
**dadurch gekennzeichnet, dass**
mindestens eine der mindestens einen thermischen Schnittstellen (15, 16) eine obere thermische Schnittstelle (15) ist, mindestens eines der mindestens einen Kontaktbleche (12, 13) ein oberes Kontaktblech (12) ist, das mindestens eine der mindestens einen Oberseiten (6) berührt und auf die obere thermische Schnittstelle (15) laminiert ist.

3. Heizmodul nach Anspruch 1 oder 2,
**dadurch gekennzeichnet, dass**
mindestens eine der mindestens einen thermischen Schnittstellen (15, 16) eine untere thermische Schnittstelle (16) ist, mindestens eines der mindestens einen Kontaktbleche (12, 13) ein unteres Kontaktblech (13) ist, das mindestens eine der mindestens einen Unterseiten (7) berührt und auf die untere thermische Schnittstelle (16) laminiert ist.

4. Heizmodul nach einem der Ansprüche 1 bis 3,
**dadurch gekennzeichnet, dass**
- das Modul (1) mindestens zwei Heizelemente (3) umfasst,
- das Modul (1) für mindestens zwei der Oberseiten (6) und/oder mindestens zwei der Unterseiten (7) eine gemeinsame thermische Schnittstelle (31) umfasst,
- das Modul (1) für mindestens zwei der Oberseiten (6) oder Unterseiten (7) ein gemeinsames Kontaktblech (14) umfasst, das auf die zugehörige thermische Schnittstelle (15, 16) laminiert ist.

5. Heizmodul nach Anspruch 4,
**dadurch gekennzeichnet, dass**
mindestens eines der mindestens einen gemeinsamen Bleche (14) für den elektrischen Anschluss an ein Stromnetz als Sammelschiene (25) ausgebildet ist und die zugehörige thermische Schnittstelle (15, 16) überragt.

6. Heizmodul nach Anspruch 5,
**dadurch gekennzeichnet, dass**
die Stromschiene (25) eine in Abstandsrichtung (8) verlaufende Dicke (28) von weniger als 0,2 mm, insbesondere von weniger als 0,1 mm umfasst.

7. Heizmodul nach einem der Ansprüche 4 bis 6,
**dadurch gekennzeichnet, dass**
- das gemeinsame Blech (14) für jede zugehörige Seite (6, 7) einen zugehörigen Kontaktabschnitt (21) umfasst,
- das gemeinsame Blech (14) zwischen aufeinanderfolgenden Kontaktabschnitten (21) einen Verbindungsabschnitt (22) umfasst,
- die Verbindungsabschnitte (22) eine Fläche aufweisen, die kleiner ist als eine Fläche der Kontaktabschnitte (21).

8. Heizmodul nach einem der Ansprüche 1 bis 7,
**dadurch gekennzeichnet, dass**
die Aussparung (23) quer zur Abstandsrichtung (8) durch zwei Hülsen (24) der thermischen Schnittstelle (15, 16) begrenzt ist, wobei die Hülsen (24) die zugehörige Fläche (6, 7) des mindestens einen zugehörigen Heizelements (3) berühren.

9. Heizmodul nach einem der Ansprüche 1 bis 8,
**dadurch gekennzeichnet, dass**
mindestens eines der Kontaktbleche (12, 13) aus einer Kupferlegierung oder aus Aluminium besteht.

10. Heizmodul nach einem der Ansprüche 1 bis 9,
**dadurch gekennzeichnet, dass**
mindestens eine der mindestens einen thermischen Schnittstellen (15, 16) ein isolierendes und weiches Polymer umfasst.

11. Heizmodul nach Anspruch 10,
**dadurch gekennzeichnet, dass**
mindestens eine der mindestens einen thermischen Schnittstellen (15, 16) ein lonengel umfasst.

12. Heizmodul nach einem der Ansprüche 1 bis 11,
**dadurch gekennzeichnet, dass**
- jede thermische Schnittstelle (15, 16) eine in Abstandsrichtung (8) verlaufende Schnittstellendicke (27) umfasst.
- jedes Kontaktblech (12, 13) eine in Abstandsrichtung (8) verlaufende Blechdicke (28) umfasst,
- **dadurch gekennzeichnet, dass** die Schnittstellendicke (27) von mindestens einer der mindestens einen thermischen Schnittstellen (15, 16) mindestens doppelt so groß ist wie die Blechdicke (28) des zugehörigen Kontaktblechs (12, 13).

13. Heizvorrichtung (2) mit mindestens einem Heizmodul (1) nach einem der Ansprüche 1 bis 12 und mit mindestens einem Heizbereich (19, 20), der auf der von der zugehörigen Seite (6, 7) abgewandten Seite einer zugehörigen der mindestens einen thermischen Schnittstellen (15, 16) angeordnet ist.

## Revendications

1. Module de chauffage (1) pour un dispositif de chauffage (2),
- avec au moins un élément chauffant électrique (3), qui présente une face supérieure (6) et une face inférieure (7) à l'opposé de la face supérieure (6) et écartée de la face supérieure (6) dans une direction d'écartement (8),
- dans lequel, pour au moins l'une des faces (6, 7), le module (1) comprend une feuille de contact conductrice correspondante (12, 13) pour l'alimentation électrique de l'élément chauffant (3), qui est disposée sur la face correspondante (6, 7),
- dans lequel, pour chaque feuille de contact (12, 13), le module comprend une interface thermique (15, 16) pour transférer la chaleur générée dans l'élément chauffant (3) vers une zone de chauffage (19, 20) écartée de la feuille de contact (12, 13) et disposée sur le côté de l'interface thermique (15, 16) à l'opposé de la feuille de contact (12, 13),
- dans lequel au moins une des interfaces thermiques (15, 16) est isolante et souple et la feuille de contact correspondante (12, 13) est stratifiée sur l'interface thermique (15, 16),
**caractérisé en ce que**
au moins une de la au moins une interface thermique (15, 16) comprend une cavité (23) qui s'ouvre dans la direction d'écartement (8), dans laquelle la feuille de contact correspondante (12, 13) est stratifiée.

2. Module de chauffage selon la revendication 1,
**caractérisé en ce que**
au moins une de la au moins une interface thermique (15, 16) est une interface thermique supérieure (15), au moins une de la au moins une feuille de contact (12, 13) est une feuille de contact supérieure (12) qui touche au moins une de la moins une face supérieure (6) et est stratifiée sur l'interface thermique supérieure (15).

3. Module de chauffage selon la revendication 1 ou 2,
**caractérisé en ce que**
au moins une de la au moins une interface thermique (15, 16) est une interface thermique inférieure (16), au moins une de la au moins une feuille de contact (12, 13) est une feuille de contact inférieure (13) qui touche au moins une de la moins une face inférieure (7) et est stratifiée sur l'interface thermique inférieure (16).

4. Module de chauffage selon l'une quelconque des revendications 1 à 3, **caractérisé en ce que**
- le module (1) comprend au moins deux éléments chauffants (3),
- le module (1), pour au moins deux des faces supérieures (6) et/ou au moins deux des faces inférieures (7), comprend une interface thermique commune (31),
- le module (1), pour au moins deux des faces supérieures (6) ou des faces inférieures (7), comprend une feuille de contact commune (14), qui est stratifiée sur l'interface thermique correspondante (15, 16).

5. Module de chauffage selon la revendication 4,
**caractérisé en ce que**
au moins une de la au moins une feuille commune (14), pour la connexion électrique à une alimentation électrique, est construite sous la forme une barre distributrice (25) et dépasse de l'interface thermique correspondante (15, 16).

6. Module de chauffage selon la revendication 5,
**caractérisé en ce que**
la barre distributrice (25) comprend une épaisseur (28) inférieure à 0,2 mm, en particulier inférieure à 0,1 mm, s'étendant dans la direction d'écartement (8).

7. Module de chauffage selon l'une quelconque des revendications 4 à 6, **caractérisé en ce que**
- la feuille commune (14), pour chaque face correspondante (6, 7), comprend une section de contact correspondante (21),
- la feuille commune (14), entre des sections de contact successives (21), comprend une section de connexion (22),
- les sections de connexion (22) présentent une aire, qui est inférieure à une aire des sections de contact (21).

8. Module de chauffage selon l'une quelconque des revendications 1 à 7,
**caractérisé en ce que**
la cavité (23), transversalement à la direction d'écartement (8), est délimitée par deux colliers (24) de l'interface thermique (15, 16), lesquels colliers (24) touchent la face correspondante (6, 7) du au moins un élément chauffant correspondant (3).

9. Module de chauffage selon l'une quelconque des revendications 1 à 8,
**caractérisé en ce que**
au moins une de la au moins une feuille de contact (12, 13) est en alliage de cuivre ou en aluminium.

10. Module de chauffage selon l'une quelconque des revendications 1 à 9,
**caractérisé en ce que**
au moins une de la au moins une interface thermique (15, 16) comprend un polymère isolant et souple.

11. Module de chauffage selon la revendication 10,
**caractérisé en ce que**
au moins une de la au moins une interface thermique (15, 16) comprend un gel ionique.

12. Module de chauffage selon l'une quelconque des revendications 1 à 11,
**caractérisé en ce que**
- chaque interface thermique (15, 16) comprend une épaisseur d'interface (27) s'étendant dans la direction d'écartement (8),
- chaque feuille de contact (12, 13) comprend une épaisseur de feuille (28) s'étendant dans la direction d'écartement (8),
- l'épaisseur d'interface (27) d'au moins une de la au moins une interface thermique (15, 16) fait au moins le double de l'épaisseur de feuille (28) de la feuille de contact correspondante (12, 13).

13. Dispositif de chauffage (2) avec au moins un module de chauffage (1) selon l'une quelconque des revendications 1 à 12, et avec au moins une zone de chauffage (19, 20), qui est disposée du côté d'une interface correspondante de la au moins une interface thermique (15, 16) à l'opposé de la face correspondante (6, 7).
